# EUROPEAN PATENT APPLICATION

(11) **EP 4 174 755 A1**
(43) Date of publication of application: **03.05.2023**
(21) Application number: 21829095.5
(22) Date of filing: 10.03.2021
(51) Int. Cl.: G06Q 50/30

(54) **VEHICLE ADMINISTRATION DEVICE, VEHICLE ADMINISTRATION METHOD, AND VEHICLE ADMINISTRATION PROGRAM**

(30) Priority: 25.06.2020 JP 2020109657
(71) Applicant: Hitachi, Ltd., Tokyo 100-8280 (JP)
(72) Inventor: FURUSAWA, Yakuma, Tokyo 100-8280 (JP); YAGI, Takahiro, Tokyo 100-8280 (JP); FUCHIWAKI, Makoto, Tokyo 100-8280 (JP)
(74) Representative: Mewburn Ellis LLP
(86) International application number: PCT/JP2021/009445
(87) International publication number: WO 2021/261028

(57) **Abstract**

A vehicle operation device (1) according to the invention includes: a supply-demand difference processing unit (22) configured to calculate a difference between a demand for a mobility service for moving a person between bases and a supply of the mobility service for each combination of the bases; and an operation plan processing unit (23) configured to transmit the difference to a provider of a vehicle that implements the mobility service for each combination of the bases. The vehicle operation device (1) according to the invention further includes: a demand processing unit (21) configured to acquire the demand from a waiting room of the base, in which the operation plan processing unit (23) transmits an operation plan of the vehicle to the waiting room.

## Description

### Technical Field

The present invention relates to a vehicle operation device, a vehicle operation method, and a vehicle operation program.

### Background Art

As a concept of next-generation mobility, "mobility as a service (MaaS)" is widely known. There is a need for a person to move from a departure place to a destination at any time. A typical example of a traditional concept that meets the need is to allow a person to own a private car. On the other hand, the MaaS provides a "service" for moving from a departure place to a destination to a person only when the person requires the service. More specifically, MaaS departs from a concept of possession of a transportation device, and places importance on an effect of being able to move from the departure place to the destination by procuring a public transportation device such as rental cars, taxies, route buses, and railways from others.

In a background of such a concept of the MaaS, it has become common to propose the public transportation device for people who desire to move by a computer. A taxi service support system according to PTL 1 indicates an area where there are many taxi users for a taxi driver, and indicates an area where there are many taxies for a taxi user. The system reduces a waiting time and an empty vehicle traveling time, and as a result, contributes to maintaining global environment and saving resources.

### Citation List

### Patent Literature

PTL 1: JP-A-2014-130552

### Summary of Invention

### Technical Problem

Currently, particularly in urban areas, a traffic model in which ride-sharing vehicles travel between a plurality of bases where people gather is proposed. It is desirable that a large number of business operators can participate in the traffic model according to a demand for movement between the bases. However, the taxi service support system according to PTL 1 merely indicates an "area" of meeting such that, for example, "if a taxi travels along a oo street, the taxi is to meet a large number of taxi users". In this system, there is a lack of a concept of creating an operation plan of a vehicle based on a demand for movement between the bases as hubs where people gather and a concept of causing a large number of vehicles having different capacities of a large number of business operators to travel at the same time.

Therefore, an object of the invention is to provide a place where various vehicles can meet a person according to a demand for movement of the person between bases.

### Solution to Problem

A vehicle operation device according to the invention includes: a supply-demand difference processing unit configured to calculate a difference between a demand for a mobility service for moving a person between bases and a supply of the mobility service for each combination of the bases; and an operation plan processing unit configured to transmit the difference to a provider of a vehicle that implements the mobility service for each combination of the bases.

Other device will be described in an embodiment for carrying out the invention.

### Advantageous Effects of Invention

According to the invention, it is possible to provide a place where various vehicles meet a person according to a demand for movement of the person between the bases.

### Brief Description of Drawings

[FIG. 1] FIG. 1 is a diagram showing a configuration and the like of a vehicle operation device.
[FIG. 2] FIG. 2 is a layout diagram of a station.
[FIG. 3] FIG. 3 is an example of number of waiting persons information.
[FIG. 4] FIG. 4 is an example of demand expression information.
[FIG. 5] FIG. 5 is an example of total demand information.
[FIG. 6] FIG. 6 is an example of operation plan information.
[FIG. 7] FIG. 7 is an example of supply-demand difference information.
[FIG. 8] FIG. 8 is an example of station information.
[FIG. 9] FIG. 9 is an example of vehicle information.
[FIG. 10] FIG. 10 is an example of arrival information.
[FIG. 11] FIG. 11 is an example of arrival notification information.
[FIG. 12] FIG. 12 is a sequence diagram of an overall processing procedure.
[FIG. 13] FIG. 13 is a flowchart of a demand aggregation processing procedure.
[FIG. 14] FIG. 14 is a flowchart of a supply-demand difference calculation processing procedure.
[FIG. 15] FIG. 15 is a flowchart of an operation plan registration processing procedure.
[FIG. 16] FIG. 16 is a flowchart of an arrival information notification processing procedure.
[FIG. 17] FIG. 17 is an example of an operation plan guidance screen.
[FIG. 18] FIG. 18 is an example of an arrival guidance screen.
[FIG. 19] FIG. 19 is an example of a station map.
[FIG. 20] FIG. 20 is an example of a supply-demand difference guidance screen.
[FIG. 21] FIG. 21 is an example of an operation plan registration screen.
[FIG. 22] FIG. 22 is an example of a station map.

### Description of Embodiments

Hereinafter, a mode for carrying out the invention (referred to as the "present embodiment") will be described in detail with reference to the drawings and the like. The present embodiment is an example showing an operation plan of a vehicle between bases for users who gather or are about to gather at the bases.

### (Terms)

The vehicle is an automobile on which an unspecified person rides and which moves on a public road.

The user is a person other than a driver who rides on the vehicle and moves.

A provider is a person who provides the vehicle to the user, and includes the driver and an operation manager of the vehicle.

The base is a place where the user gets on and off the vehicle, a vehicle moving to a plurality of other bases departs, and a vehicle moving from another base arrives. The vehicle does not allow a person to get on and off on the way from a certain base to another base. In the present embodiment, the base is also referred to as a "station" according to practice of the industry. There is not necessarily a station in the vicinity of a railway station. In addition to the railway station, the station is in the vicinity of a place where the user and the vehicle can easily access, such as a large-scale commercial facility, a government office, a medical facility, an accommodation facility, or a school.

### (Vehicle Operation Device)

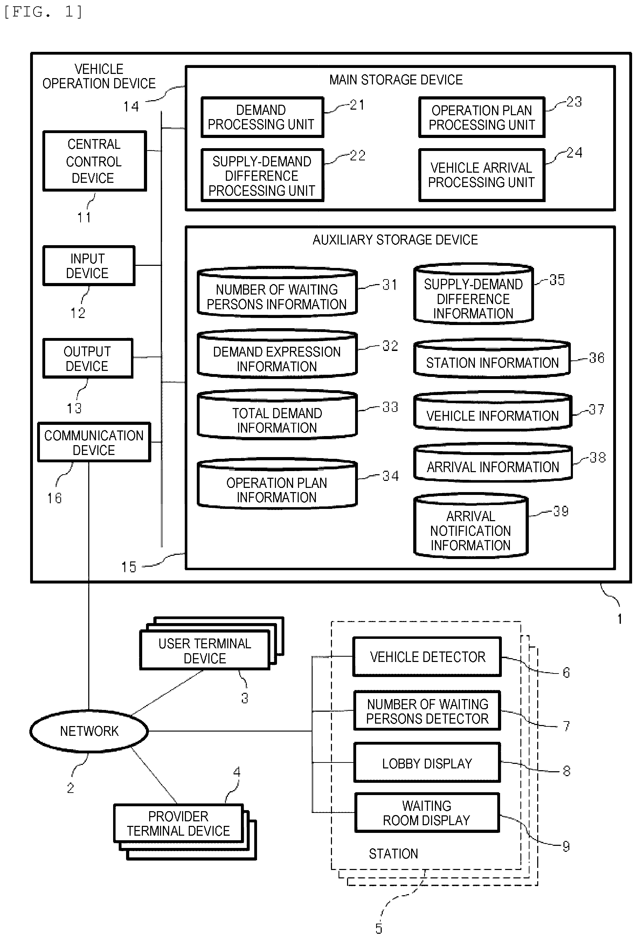

FIG. 1 is a diagram showing a configuration and the like of a vehicle operation device 1. The vehicle operation device 1 is a general computer, and includes a central control device 11, an input device 12 such as a mouse or a keyboard, an output device 13 such as a display, a main storage device 14, an auxiliary storage device 15, and a communication device 16. These components are connected to one another by a bus. The auxiliary storage device 15 stores number of waiting persons information 31, demand expression information 32, total demand information 33, operation plan information 34, supply-demand difference information 35, station information 36, vehicle information 37, arrival information 38, and arrival notification information 39 (all of which will be described in detail later).

A demand processing unit 21, a supply-demand difference processing unit 22, an operation plan processing unit 23, and a vehicle arrival processing unit 24 in the main storage device 14 are programs. The central control device 11 reads these programs from the auxiliary storage device 15 and loads the programs into the main storage device 14, thereby implementing functions of the programs (described in detail later). The auxiliary storage device 15 may be implemented independently of the vehicle operation device 1.

The vehicle operation device 1 can communicate with a plurality of user terminal devices 3 and a plurality of provider terminal devices 4 via a network 2. The user terminal device 3 is a computer (a personal computer, a mobile terminal device, or the like) used by the user. The provider terminal device 4 is a computer (a personal computer, a mobile terminal device, an in-vehicle terminal device, or the like) used by the provider. Each of the plurality of stations 5 is provided with a vehicle detector 6, a number of waiting persons detector 7, a lobby display 8, and a waiting room display 9. These devices can communicate with the vehicle operation device 1 via the network 2. A so-called "kiosk terminal device" provided in a store or the like may also serve as the number of waiting persons detector 7.

### (Station)

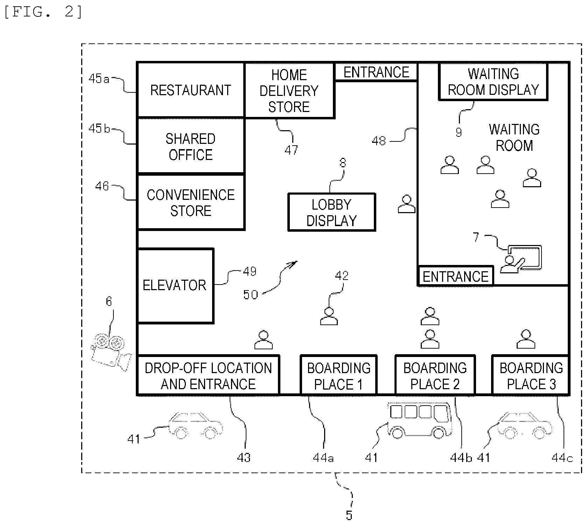

FIG. 2 is a layout diagram of a station 5. The station 5 is typically attached to any facility that attracts a large number of people, such as a railway station or a large-scale commercial facility. A user 42 arrives at the station 5 from a railway station or the like using an elevator 49. In contact with an outer edge of the station 5, a drop-off location and entrance 43, a boarding place 1 (reference sign 44a), a boarding place 2 (reference sign 44b), and a boarding place 3 (reference sign 44c) are present. A vehicle 41 on which the user 42 rides arrives at the drop-off location and entrance 43. After the user 42 gets off, the vehicle 41 moves to any one of the boarding places 1 to 3, or moves to another station while remaining empty. When the vehicle 41 moves to any one of the boarding places 1 to 3, another user 42 rides on the vehicle 41 there. The vehicle 41 on which the user 42 does not ride directly arrives at any one of the boarding places 1 to 3.

Before riding on the vehicle 41, the user 42 first enters a waiting room 48, and registers another station as a destination by operating the number of waiting persons detector 7. One station 5 may have a plurality of waiting rooms 48. The user 42 presses a button describing the destination on a touch panel of the number of waiting persons detector 7. In addition, the number of waiting persons detector 7 may image the user 42 sitting on a bench classified by destinations. In any case, the number of waiting persons detector 7 acquires the number of waiting persons for each destination in real time. The number of waiting persons detector 7 can also detect the number of users 42 who leave the waiting room.

The waiting room display 9 provided in the waiting room 48 is a large display. The waiting room display 9 displays when, from which boarding place, and with a capacity of how many people the vehicle departs for which destination. The user 42 goes out of the waiting room 48 to a lobby 50, and is lined up at any of the boarding places 1 to 3. The lobby display 8 provided in the lobby 50 is also a large display. Information displayed by the lobby display 8 is the same as that displayed by the waiting room display 9

In the lobby 50, a restaurant 45a, a shared office 45b, a convenience store 46, and a home delivery store 47 are present. The user 42 may be a customer of these stores. The vehicle detector 6 is, for example, a camera, and is provided at any position at which the drop-off location and entrance 43 and the boarding places 1 to 3 are imaged in a field of view. The vehicle detector 6 detects where and which vehicle is stopped.

### (Number of Waiting Persons Information)

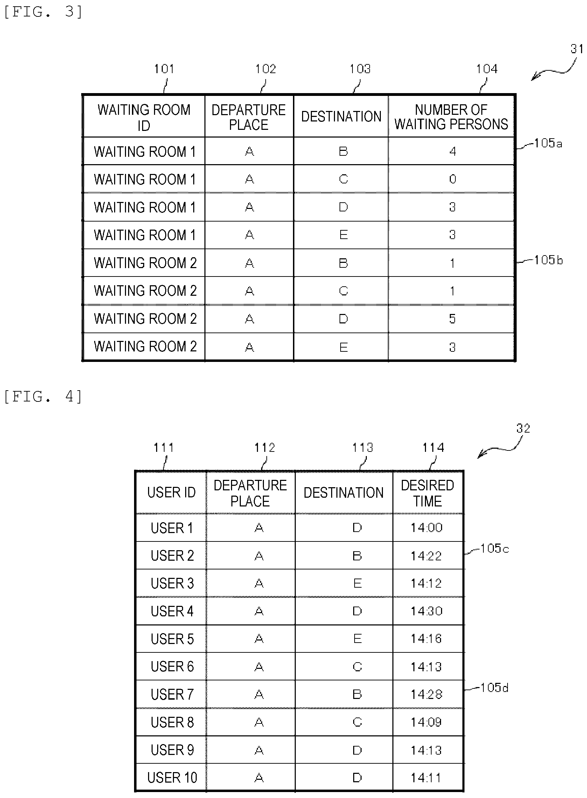

FIG. 3 is an example of the number of waiting persons information 31. In the number of waiting persons information 31, in association with a waiting room ID stored in a waiting room ID column 101, a departure place is stored in a departure place column 102, a destination is stored in a destination column 103, and the number of waiting persons is stored in a number of waiting persons column 104.

The waiting room ID in the waiting room ID column 101 is an identifier that uniquely identifies the waiting room 48.

The departure place in the departure place column 102 is a name of a station serving as a starting point of movement of the user. In the present embodiment, names "A", "B", "C", ... are each assigned to a respective one of stations. In FIG. 3, "A" is described in the departure place column 102 for convenience of description below, and is an example. Alternatively, other departure places may be described (the similar applies to FIG. 4).

The destination in the destination column 103 is a name of a station serving as an end point of the movement of the user.

The number of waiting persons in the number of waiting persons column 104 is the number of waiting persons detected by the number of waiting persons detector 7 at the departure place.

### (Demand Expression Information)

FIG. 4 is an example of the demand expression information 32. In the demand expression information 32, in association with a user ID stored in a user ID column 111, a departure place is stored in a departure place column 112, a destination is stored in a destination column 113, and a desired time is stored in a desired time column 114.

The user ID in the user ID column 111 is an identifier that uniquely identifies a person who expresses an intention to ride on the vehicle 41 using the user terminal device 3 among users 42. In addition to inputting the information to the number of waiting persons detector 7 in the waiting room 48 as described above, the user 42 can also input the departure place, the destination, and the desired time (immediately described later) to the user terminal device 3.

The departure place in the departure place column 112 is the same as the departure place in FIG. 3.

The destination in the destination column 113 is the same as the destination in FIG. 3.

The desired time in the desired time column 114 is a boarding time to the vehicle 41 at the departure place desired by the user.

### (Total Demand Information)

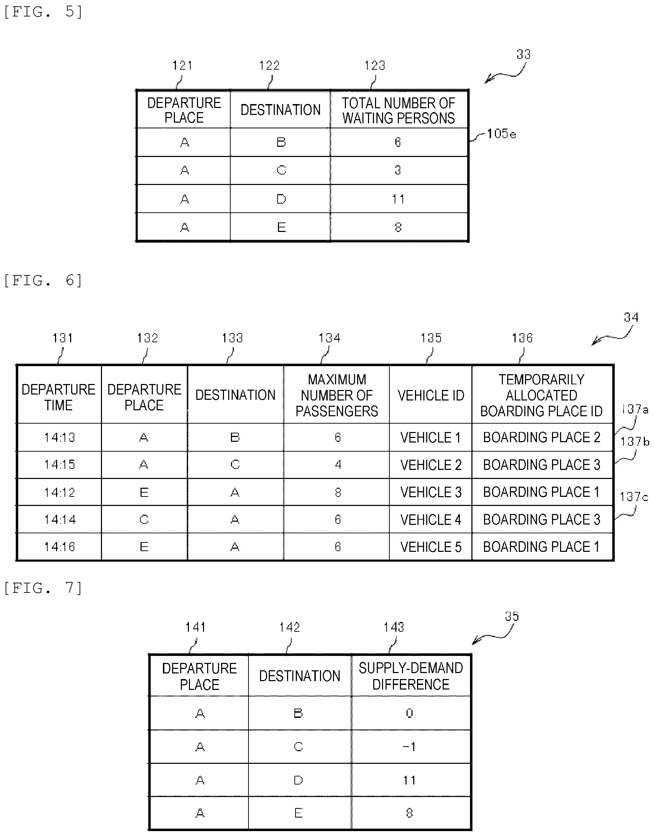

FIG. 5 is an example of the total demand information 33. In the total demand information 33, in association with a departure place stored in a departure place column 121, a destination is stored in a destination column 122, and a total number of waiting persons is stored in a total number of waiting persons column 123.

The departure place in the departure place column 121 is the same as the departure place in FIG. 3.

The destination in the destination column 122 is the same as the destination in FIG. 3.

The total number of waiting persons in the total number of waiting persons column 123 is a sum of the number of waiting persons detected by the number of waiting persons detector 7 and the number of users who express intentions to ride on the vehicle using the user terminal device 3.

### (Total Number of Waiting Persons)

The vehicle operation device 1 calculates, for example, a total number of waiting persons from the departure place A to a destination B as follows.
<1> The vehicle operation device 1 acquires, from the number of waiting persons information 31 (FIG. 3), the number of waiting persons in a record in which the departure place is "A" and the destination is "B". In the example in FIG. 3, "4" of a record 105a and "1" of a record 105b are acquired.
<2> The vehicle operation device 1 acquires, from the demand expression information 32 (FIG. 4), the number of records in which the desired time falls within a predetermined time from a current time as a starting point among records in which the departure place is "A" and the destination is "B". When the current time is "14:10" and a predetermined time is "15 minutes", in the example in FIG. 4, a record 105c corresponds to such a record, but a record 105d does not correspond to such a record. Therefore, "1" is acquired.
<3> The vehicle operation device 1 sets a result obtained by totaling the number of waiting persons acquired in <1> and the number of pieces acquired in <2> as the total number of waiting persons. In the examples in FIGS. 3 and 4, "4 + 1 + 1 = 6" is acquired.

### (Operation Plan Information)

FIG. 6 is an example of the operation plan information 34. In the operation plan information 34, in association with a departure time stored in a departure time column 131, a departure place is stored in a departure place column 132, a destination is stored in a destination column 133, a maximum number of passengers is stored in a maximum number of passengers column 134, a vehicle ID is stored in a vehicle ID column 135, and a temporarily allocated boarding place ID is stored in a temporarily allocated boarding place ID column 136.

The departure time in the departure time column 131 is a scheduled departure time of the vehicle 41 at the departure place.

The departure place in the departure place column 132 is the same as the departure place in FIG. 3.

The destination in the destination column 133 is the same as the destination in FIG. 3.

The maximum number of passengers in the maximum number of passengers column 134 is a capacity of the vehicle 41 (excluding the driver).

The vehicle ID in the vehicle ID column 135 is an identifier that uniquely identifies the vehicle 41.

The temporarily allocated boarding place ID in the temporarily allocated boarding place ID column 136 is a boarding place ID temporarily allocated for the vehicle 41. The boarding place ID is an identifier that uniquely identifies a boarding place at the departure place. It is sufficient that the boarding place ID can uniquely identify the boarding place in one station 5. That is, a "boarding place 3" of a record 137b in FIG. 6 is the boarding place 3 of a station A, and a "boarding place 3" of a record 137c is the boarding place 3 of a station C. The term "temporarily allocated" will be described later.

### (Supply-Demand Difference Information)

FIG. 7 is an example of the supply-demand difference information 35. In the supply-demand difference information 35, in association with a departure place stored in a departure place column 141, a destination is stored in a destination column 142 and a supply-demand difference is stored in a supply-demand difference column 143.

The departure place in the departure place column 141 is the same as the departure place in FIG. 3.

The destination in the destination column 142 is the same as the destination in FIG. 3.

The supply-demand difference in the supply-demand difference column 143 is a difference (may be a negative value) obtained by subtracting the maximum number of passengers in FIG. 6 from the total number of waiting persons in FIG. 5.

### (Supply-Demand Difference)

The vehicle operation device 1 calculates, for example, a supply-demand difference (difference) from the departure place A to the destination B as follows.

<4> The vehicle operation device 1 acquires, from the total demand information 33 (FIG. 5), the total number of waiting persons in a record in which the departure place is "A" and the destination is "B". In the example in FIG. 5, "6" of a record 105e is acquired.

<5> The vehicle operation device 1 extracts, from the operation plan information 34 (FIG. 6), all records in which the departure time falls within the predetermined time from the current time as the starting point among records in which the departure place is "A" and the destination is "B", and acquires a total of the maximum number of passengers in the extracted records. As described above, when the current time is "14:10" and the predetermined time is "15 minutes", in the example in FIG. 6, a record 137a is extracted, and "6" is acquired as the total of the maximum number of passengers.

<6> The vehicle operation device 1 sets, as the supply-demand difference, a result obtained by subtracting the total of the maximum number of passengers acquired in <5> from the total number of waiting persons acquired in <4>. In the examples in FIGS. 5 and 6, "6 - 6 = 0" is acquired.

Thus, a record in a first row in FIG. 7 is completed. Calculation of the supply-demand difference is similar for the other records in FIG. 7 (there is no corresponding record in FIG. 6 for third and fourth rows).

### (Station Information)

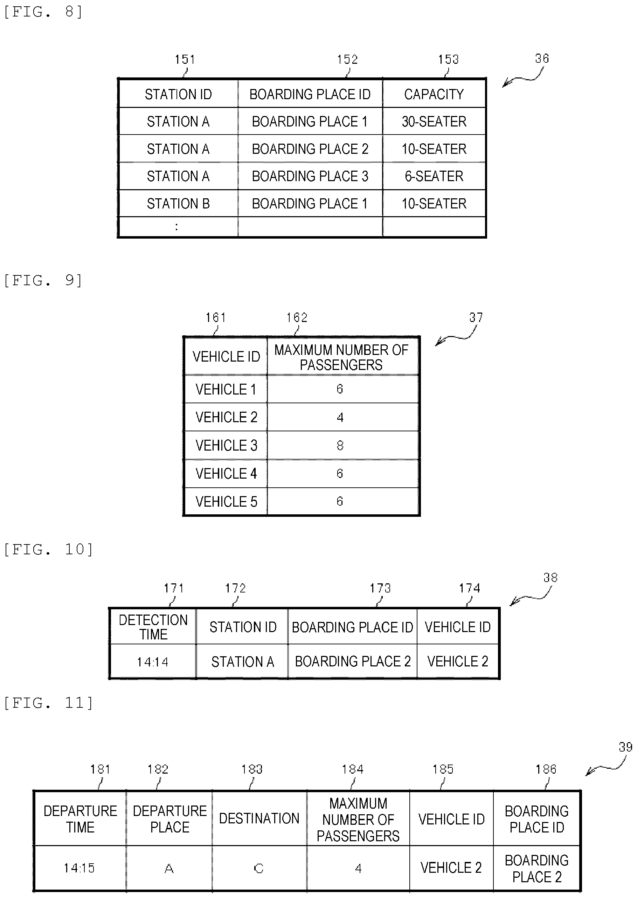

FIG. 8 is an example of the station information 36. In the station information 36, in association with a station ID stored in a station ID column 151, a boarding place ID is stored in a boarding place ID column 152, and a capacity is stored in a capacity column 153.

The station ID in the station ID column 151 is an identifier that uniquely identifies the station.

As described above, the boarding place ID in the boarding place ID column 152 is an identifier that uniquely identifies the boarding place in one station 5.

The capacity in the capacity column 153 is a size of the boarding place indicated by the maximum number of passengers in one stoppable vehicle. The size of the boarding place is a concept including not only a stop space of the vehicle 41 but also a waiting space, a boarding space, a luggage loading and unloading space, and the like of the user 42. In order to simplify the description, in the present embodiment, it is assumed that the number of vehicles 41 that can be simultaneously stopped in a boarding place is "1".

### (Vehicle Information)

FIG. 9 is an example of the vehicle information 37. In the vehicle information 37, in association with a vehicle ID stored in a vehicle ID column 161, a maximum number of passengers is stored in a maximum number of passengers column 162.

The vehicle ID in the vehicle ID column 161 is the same as the vehicle ID in FIG. 6.

The maximum number of passengers in the maximum number of passengers column 162 is the same as the maximum number of passengers in FIG. 6.

In addition to these pieces of information, the vehicle information 37 may include following information related to vehicle service.
- Whether foreign languages are supported
- Whether barrier-free (wheelchair can be used on board as it is)

### (Arrival Information)

FIG. 10 is an example of the arrival information 38. In the arrival information 38, in association with a detection time stored in a detection time column 171, a station ID is stored in a station ID column 172, a boarding place ID is stored in a boarding place ID column 173, and a vehicle ID is stored in a vehicle ID column 174.

The detection time in the detection time column 171 is a time when the vehicle detector 6 detects the vehicle 41 arriving at the drop-off location and entrance 43.

The station ID in the station ID column 172 is the same as the station ID in FIG. 8.

As described above, the boarding place ID in the boarding place ID column 173 is an identifier that uniquely identifies the boarding place in one station 5.

The vehicle ID in the vehicle ID column 174 is the same as the vehicle ID in FIG. 6.

### (Arrival Notification Information)

FIG. 11 is an example of the arrival notification information 39. The arrival notification information 39 has a configuration similar to that of the operation plan information 34 (FIG. 6). The arrival notification information 39 is different from the operation plan information 34 in following points.
- While the operation plan information 34 has a plurality of records, in the present embodiment, the arrival notification information 39 has only one record. This is because, while the operation plan information 34 indicates an operation plan of the vehicle in a timetable, the arrival notification information 39 is for displaying information on the vehicle 41 that arrives at the station 5 soon on the waiting room display 9 or the like.
- Instead of the operation plan information 34 having the temporarily allocated boarding place ID column 136, in the present embodiment, the arrival notification information 39 has a boarding place ID column 186. This is because the boarding place ID in the arrival notification information 39 is not temporarily allocated but is determined immediately before the arrival.

### (Overall Processing Procedure)

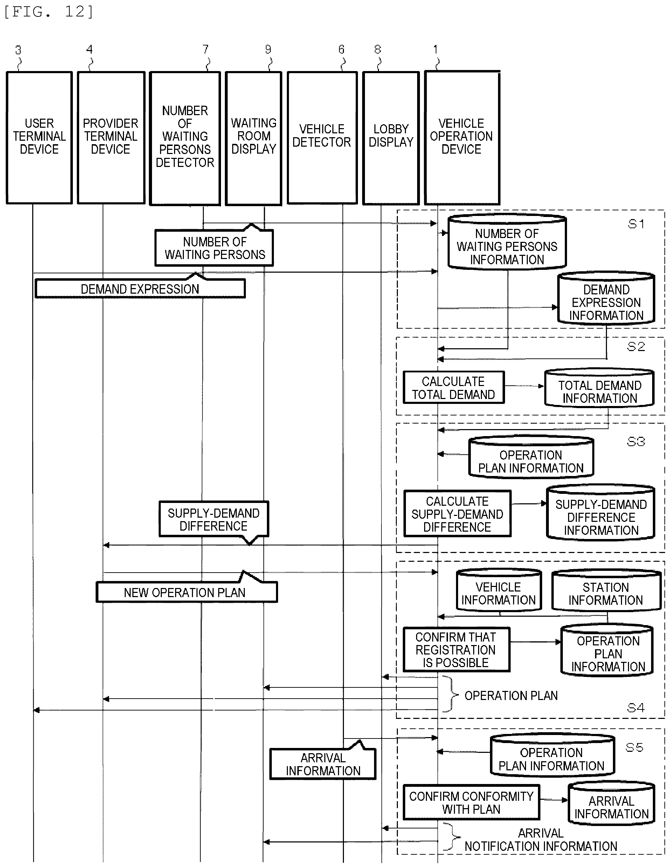

FIG. 12 is a sequence diagram of the overall processing procedure. There are five processing procedures, and steps S1, S2, S3, S4, and S5 are executed in this order. Here, in order to facilitate understanding of the present embodiment, an outline of each step will be briefly described. Details of each step (excluding S1) will be described later.

<Step S1> The demand processing unit 21 of the vehicle operation device 1 acquires the number of waiting persons from the number of waiting persons detector 7, stores the acquired number of waiting persons in the number of waiting persons information 31 (FIG. 3), acquires a demand expression from the user terminal device 3, and stores the acquired demand expression in the demand expression information 32 (FIG. 4). The vehicle operation device 1 constantly maintains the number of waiting persons information 31 and the demand expression information 32 in the latest states.

<Step S2> The vehicle operation device 1 calculates a total demand based on the number of waiting persons information 31 and the demand expression information 32 at any timing, and stores the total demand as the total demand information 33 (FIG. 5). The described above "14:10" is an example of any timing here.

<Step S3> The vehicle operation device 1 calculates a supply-demand difference based on the total demand information 33 and the already completed operation plan information 34 (FIG. 6) at that time, and stores the supply-demand difference as supply-demand difference information 35 (FIG. 7). The vehicle operation device 1 notifies the provider terminal device 4 of the calculated supply-demand difference. Since the supply-demand difference is associated with a combination of a departure place and a destination, a provider (for example, a driver) who sees the supply-demand difference knows to which departure place is likely to be acquired by the user.

<Step S4> The provider who knows the supply-demand difference inputs, as a "new operation plan", going to a departure place of a combination having a large supply-demand difference to the provider terminal device 4. Immediately after that, the provider terminal device 4 transmits the new operation plan to the vehicle operation device 1. The new operation plan indicates which vehicle having which maximum number of passengers desires to depart from which temporarily allocated boarding place at which departure place and when.

When there is a boarding place having a capacity to stop a vehicle according to the new operation plan at the departure place and the boarding place is not in conflict with another vehicle at that time, the vehicle operation device 1 determines that the new operation plan can be registered, and updates the operation plan information 34 by additionally storing the new operation plan. In order to make the determination, the vehicle operation device 1 refers to the station information 36, the vehicle information 37, and the operation plan information 34 at the latest time.

The vehicle operation device 1 transmits the updated operation plan information 34 to the lobby display 8 and the waiting room display 9 at the departure place, and also transmits the updated operation plan information 34 to the user terminal device 3 and the provider terminal device 4. As a result, the user 42 who inputs the demand expression to the user terminal device 3 confidently heads to the departure place, and the user 42 at the departure place knows that the number of vehicles is increased.

<Step S5> When the vehicle 41 arrives at the station 5, the vehicle detector 6 detects the vehicle 41 arrived, creates arrival information on the vehicle 41, and transmits the arrival information to the vehicle operation device 1. The vehicle operation device 1 compares the received arrival information with the latest operation plan information 34, and determines that the vehicle 41 is to arrive at the departure place at the time, the vehicle operation device 1 stores the received arrival information as the arrival information 38 (FIG. 10). The vehicle operation device 1 creates the arrival notification information 39 (FIG. 11) and transmits the arrival notification information 39 to the lobby display 8 and the waiting room display 9 at the departure place. The user 42 who sees the arrival notification information 39 goes to the boarding place.

### (Demand Aggregation Processing Procedure)

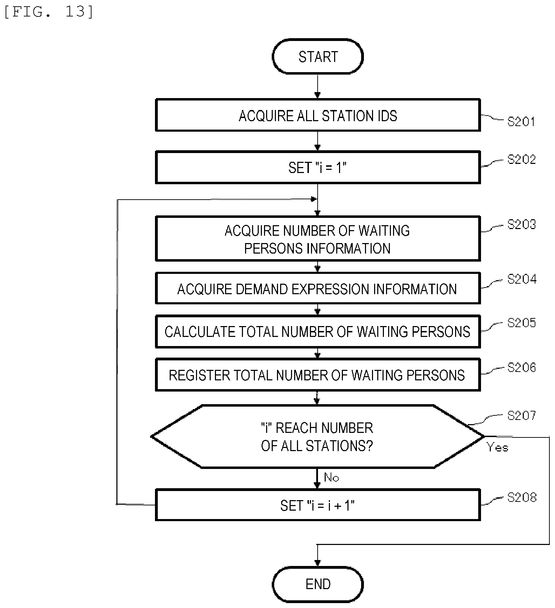

FIG. 13 is a flowchart of the demand aggregation processing procedure. The demand aggregation processing procedure corresponds to step S2 in FIG. 12. As a premise of starting the demand aggregation processing procedure, it is assumed that the number of waiting persons information 31 (FIG. 3) and the demand expression information 32 (FIG. 4) are stored in the auxiliary storage device 15 in the latest states.

In step S201, the demand processing unit 21 of the vehicle operation device 1 acquires all station IDs. The station IDs described above are, for example, "station A", "station B", "station C", .... Therefore, for convenience of description, the demand processing unit 21 replaces the "station A", "station B", "station C", ... with "1", "2", "3", ....

In step S202, the demand processing unit 21 sets "i = 1". Specifically, the demand processing unit 21 substitutes an initial value "1" into a counter "i" for repetitive processing. The counter indicates the number of times of processing and identifies a station to be processed.

In step S203, the demand processing unit 21 acquires the number of waiting persons information 31 (FIG. 3). Specifically, the demand processing unit 21 acquires all records in which "A" is stored in the departure place column 102 in the number of waiting persons information 31. If "i = 2", the demand processing unit 21 acquires all records in which "B" is stored.

In step S204, the demand processing unit 21 acquires the demand expression information 32 (FIG. 4). Specifically, the demand processing unit 21 acquires all records in the demand expression information 32 in which "A" corresponding to "i = 1" is stored in the departure place column 112 and times within a predetermined time from a current time as a starting point are stored in the desired time column 114.

In step S205, the demand processing unit 21 calculates the total number of waiting persons. Specifically, the demand processing unit 21 calculates the total number of waiting persons (the column 123 in FIG. 5) based on the record of the number of waiting persons information 31 acquired in step S203 and the record of the demand expression information 32 acquired in step S204. The demand processing unit 21 calculates the total number of waiting persons for each destination other than "A".

In step S206, the demand processing unit 21 registers the total number of waiting persons. Specifically, the demand processing unit 21 registers the departure place A, another destination, and the total number of waiting persons as a record of the total demand information 33 (FIG. 5). When there is a station up to "station Z", 25 records of the total demand information 33 are registered each time step S206 is executed.

In step S207, the demand processing unit 21 determines whether "i" reaches the number of all stations. If "station A", "station B", ... and "station Z" are present, the number of all the stations is "26". When "i" does not reach the number of all the stations ("No" in step S207), the demand processing unit 21 proceeds to step S208, and when "i" reaches the number of all the stations ("Yes" in step S207), the demand aggregation processing procedure ends.

In step S208, the demand processing unit 21 sets "i = i + 1". Specifically, the demand processing unit 21 adds "1" to the counter "i", and then returns to step S203. In steps S203 to S206 after returning, the demand processing unit 21 executes the same processing as described above for the "station B", the "station C", .... At a stage when the demand aggregation processing procedure ends, the total demand information 33 has 26 × 25 records.

### (Supply-Demand Difference Calculation Processing Procedure)

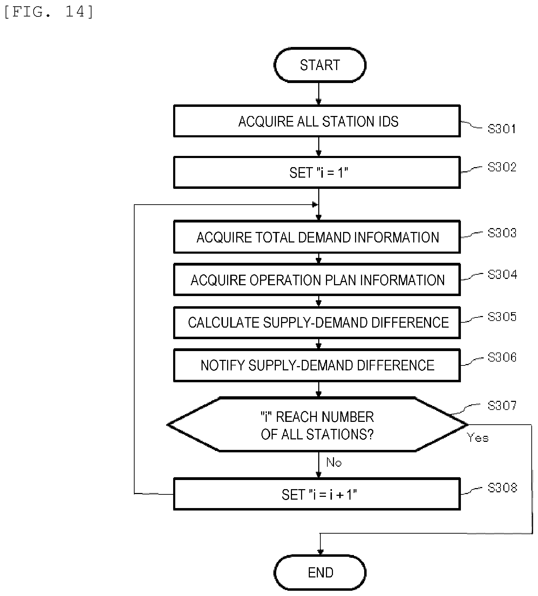

FIG. 14 is a flowchart of the supply-demand difference calculation processing procedure. The supply-demand difference calculation processing procedure corresponds to step S3 in FIG. 12. As a premise of starting the supply-demand difference calculation processing procedure, it is assumed that the total demand information 33 (FIG. 5) and the operation plan information 34 (FIG. 6) are stored in the auxiliary storage device 15 in the latest states.

In step S301, the supply-demand difference processing unit 22 of the vehicle operation device 1 acquires all station IDs. Here, for convenience of description, the supply-demand difference processing unit 21 replaces "station A", "station B", "station C", ... with "1", "2", "3", ....

In step S302, the supply-demand difference processing unit 22 sets "i = 1". Specifically, the supply-demand difference processing unit 22 substitutes an initial value "1" into a counter "i" for repetitive processing. Here, the counter indicates the number of times of processing and identifies a station to be processed.

In step S303, the supply-demand difference processing unit 22 acquires the total demand information 33 (FIG. 5). Specifically, the supply-demand difference processing unit 22 acquires all records in which "A" is stored in the departure place column 121 in the total demand information 33.

In step S304, the supply-demand difference processing unit 22 acquires the operation plan information 34 (FIG. 6). Specifically, the supply-demand difference processing unit 22 acquires all records in the operation plan information 34 in which "A" is stored in the departure place column 132 and times within a predetermined time from a current time as a starting point are stored in the departure time column 131.

In step S305, the supply-demand difference processing unit 22 calculates a supply-demand difference. Specifically, the supply-demand difference processing unit 22 calculates the supply-demand difference (the column 143 in FIG. 7) based on the record of the total demand information 33 acquired in step S303 and the record of the operation plan information 34 acquired in step S304. The supply-demand difference processing unit 22 calculates the supply-demand difference for each destination other than "A".

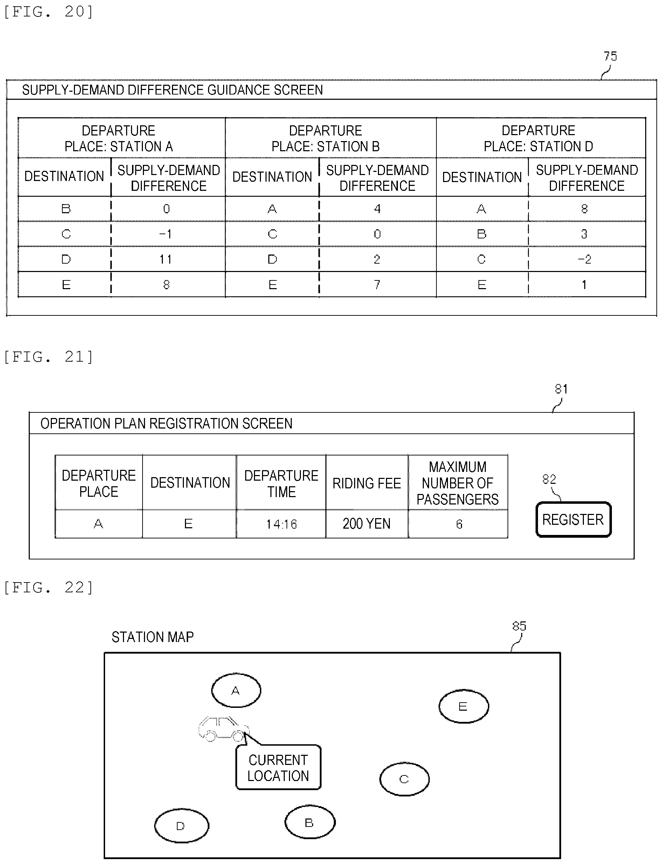

In step S306, the supply-demand difference processing unit 22 notifies the supply-demand difference. Specifically, the supply-demand difference processing unit 22 transmits the supply-demand difference calculated in step S305 to the provider terminal device 4. Each time step S306 is executed, the supply-demand difference processing unit 22 displays a supply-demand difference guidance screen 75 (FIG. 20) on the provider terminal device 4 for each departure place.

In step S307, the supply-demand difference processing unit 22 determines whether "i" reaches the number of all stations. Specifically, when "i" does not reach the number of all the stations ("No" in step S307), the supply-demand difference processing unit 22 proceeds to step S308, and when "i" reaches the number of all the stations ("Yes" in step S307), the supply-demand difference calculation processing procedure ends.

### (Display of Supply-Demand Difference Guidance Screen)

In the above description, the supply-demand difference processing unit 22 displays supply-demand differences between a certain departure place and all other destinations on the supply-demand difference guidance screen 75 each time step S306 is executed. The "certain departure place" changes to the station A, the station B, .... However, the provider is usually not interested in a departure place far from the vehicle 41 of the provider.

Therefore, the supply-demand difference processing unit 22 may identify a predetermined number of departure places in ascending order of distance from a current position of the vehicle 41, and may initially display the destination and the supply-demand difference for the identified departure place. In FIG. 20, the predetermined number (the number of departure places) is "3", and the departure places have shorter distances to the current position of the vehicle 41, for example, in the order of the station A, the station B, and the station D. When the supply-demand difference processing unit 22 receives a button operation or the like from the provider, the supply-demand difference processing unit 22 may additionally display a destination and a supply-demand difference for another departure place. The supply-demand difference processing unit 22 can know the current position of the vehicle 41 using, for example, a GPS function or the like.

### (Operation Plan Registration Processing Procedure)

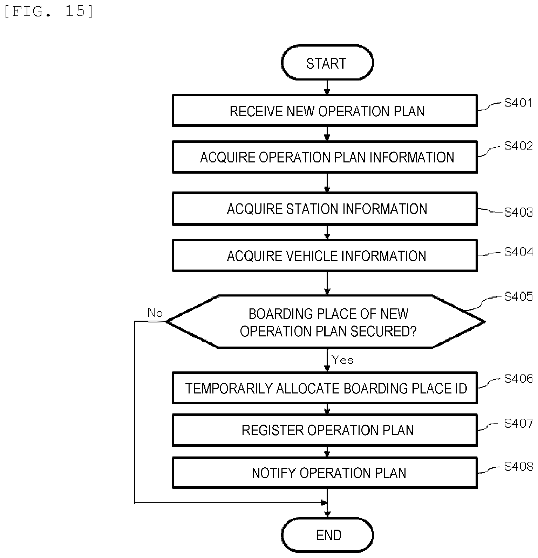

FIG. 15 is a flowchart of the operation plan registration processing procedure. The operation plan registration processing procedure corresponds to step S4 in FIG. 12. As a premise of starting the operation plan registration processing procedure, it is assumed that the operation plan information 34 (FIG. 6), the station information 36 (FIG. 8), and the vehicle information 37 (FIG. 9) are stored in the auxiliary storage device 15 in the latest states.

In step S401, the operation plan processing unit 23 of the vehicle operation device 1 receives a new operation plan. Specifically, first, the operation plan processing unit 23 displays an operation plan registration screen 81 (FIG. 21) on the provider terminal device 4. The operation plan processing unit 23 receives an input of a departure place, a destination, a departure time, a riding fee, and a maximum number of passengers as a "new operation plan" and a press of a register button 82 by the provider on the operation plan registration screen 81. The new operation plan is a specific content of an operation that the provider desires to perform in the vehicle at a next opportunity.

Secondly, the operation plan processing unit 23 receives the new operation plan together with the vehicle ID from the provider terminal device 4. For convenience of description, it is assumed that the new operation plan here is information as described in FIG. 21, and the operation plan processing unit 23 receives "vehicle 1" as the vehicle ID.

In step S402, the operation plan processing unit 23 acquires the operation plan information 34 (FIG. 6). Specifically, the operation plan processing unit 23 acquires a record in which "A" is stored in the departure place column 132 in the operation plan information 34. This "A" corresponds to the departure place "A" of the operation plan registration screen 81 in FIG. 21.

In step S403, the operation plan processing unit 23 acquires the station information 36 (FIG. 8). Specifically, the operation plan processing unit 23 acquires a record in which "station A" is stored in the station ID column 151 in the station information 36.

In step S404, the operation plan processing unit 23 acquires the vehicle information 37 (FIG. 9). Specifically, the operation plan processing unit 23 refers to the vehicle information 37 and acquires the maximum number of passengers corresponding to the "vehicle 1". A maximum number of passengers acquired here usually matches the maximum number of passengers included in the new operation plan.

In step S405, the operation plan processing unit 23 determines whether a boarding place of the new operation plan is secured. Specifically, first, the operation plan processing unit 23 checks whether there is a boarding place that simultaneously satisfies following conditions 1 and 2 in the station A based on the information acquired in steps S402 to S404.

<Condition 1> A capacity of the boarding place is equal to or greater than the maximum number of passengers in the record acquired in step S404.

<Condition 2> At the departure time included in the new operation plan, the boarding place is not temporarily allocated to another vehicle.

Secondly, when there is such a boarding place ("Yes" in step S405), the operation plan processing unit 23 holds the boarding place ID and proceeds to step S406. When a plurality of boarding place IDs are applicable, the operation plan processing unit 23 selects a boarding place whose capacity is closest to the maximum number of passengers of the record acquired in step S404. Otherwise ("No" in step S405), the operation plan processing unit 23 ends the operation plan registration processing procedure. For convenience of description, it is assumed that the operation plan processing unit 23 holds the boarding place ID "boarding place 2" and proceeds to step S406.

In step S406, the operation plan processing unit 23 temporarily allocates a boarding place ID. Specifically, the operation plan processing unit 23 allocates the "boarding place 2" of the station A to the "vehicle 1".

In step S407, the operation plan processing unit 23 registers the operation plan. Specifically, the operation plan processing unit 23 creates a new record in the operation plan information 34 (FIG. 6). The new record includes the departure time, the departure place, the destination, and the maximum number of passengers included in the new operation plan, and also includes the vehicle ID "vehicle 1" and the temporarily allocated boarding place ID "boarding place 2".

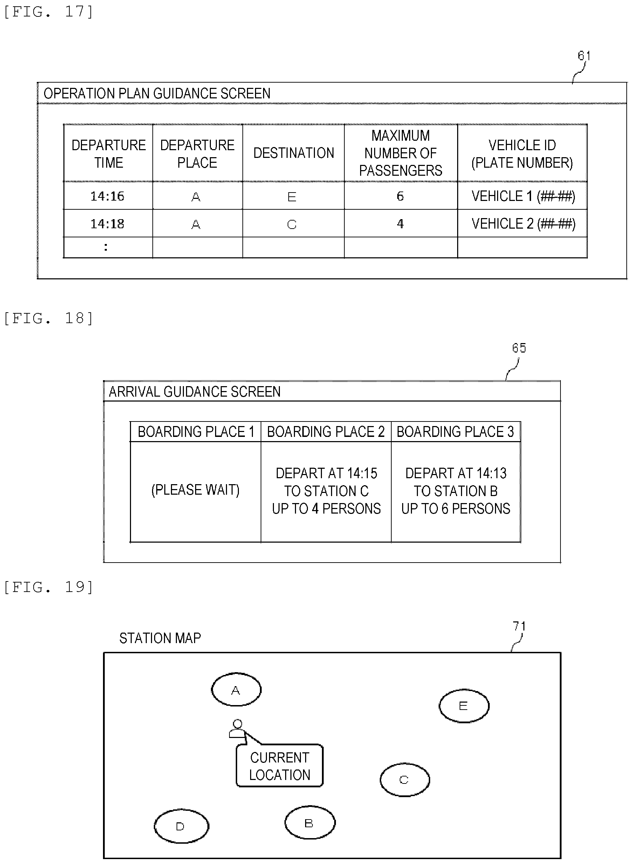

In step S408, the operation plan processing unit 23 notifies the operation plan. Specifically, first, the operation plan processing unit 23 displays an operation plan guidance screen 61 (FIG. 17) on the user terminal device 3, the provider terminal device 4, the lobby display 8, and the waiting room display 9. The operation plan guidance screen 61 displays information obtained by excluding the temporarily allocated boarding place ID column 136 from the latest operation plan information 34 (FIG. 6). The operation plan guidance screen 61 may display a plate number or the like of the vehicle instead of or in addition to the vehicle ID for convenience of the user.

### (Arrival Information Processing Procedure)

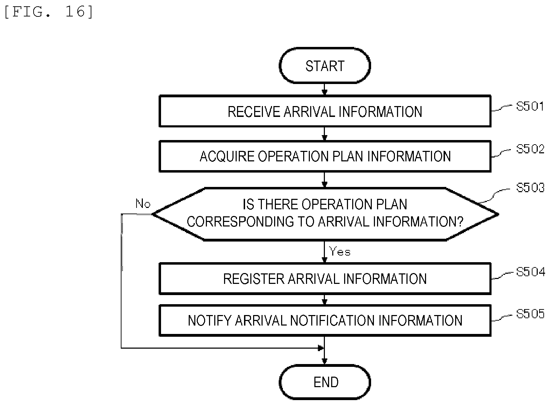

FIG. 16 is a flowchart of the arrival information processing procedure. The arrival information processing procedure corresponds to step S5 in FIG. 12. As a premise of starting the arrival information processing procedure, it is assumed that the operation plan information 34 (FIG. 6) is stored in the auxiliary storage device 15 in the latest state.

In step S501, the vehicle arrival processing unit 24 of the vehicle operation device 1 receives the arrival information 38 (FIG. 10). Specifically, the vehicle arrival processing unit 24 receives the arrival information 38 from the vehicle detector 6 of the station 5. For convenience of description, it is assumed that the arrival information 38 here includes "station A" as the station ID, "14:14" as the detection time, and "vehicle 2" as the vehicle ID. The "14:14" corresponds to the departure time "14:16" in FIG. 21.

In step S502, the vehicle arrival processing unit 24 acquires the operation plan information 34 (FIG. 6). Specifically, the vehicle arrival processing unit 24 acquires the operation plan information 34 from the auxiliary storage device 15.

In step S503, the vehicle arrival processing unit 24 determines whether an operation plan corresponding to an arrival condition is present. Specifically, first, the operation plan processing unit 23 determines whether a record (hereinafter, also referred to as a "scheduled record") that simultaneously satisfies following conditions 3 to 5 is present in the operation plan information 34.

<Condition 3> "A" is stored in the departure place column 132.

<Condition 4> "Vehicle 2" is stored in the vehicle ID column 135.

<Condition 5> "14:14 ± α" is stored in the departure time column 131. "± α" is a predetermined allowable error range. When a fixed-time operation is required, a value of α is set to be small.

Secondly, when there is a scheduled record ("Yes" in step S503), the operation plan processing unit 23 proceeds to step S504, and otherwise ("No" in step S503), the operation plan processing unit 23 ends the arrival information processing procedure.

In step S504, the vehicle arrival processing unit 24 registers the arrival information 38. Specifically, the vehicle arrival processing unit 24 stores the arrival information 38 in the auxiliary storage device 15.

In step S505, the vehicle arrival processing unit 24 notifies the arrival notification information 39 (FIG. 11). Specifically, the vehicle arrival processing unit 24 transmits the arrival notification information 39 to the lobby display 8 and the waiting room display 9. The arrival notification information 39 here matches a content of the scheduled record. Then, the lobby display 8 and the waiting room display 9 display an arrival guidance screen 65 (FIG. 18). Thereafter, the arrival information processing procedure is ended.

### (Station Map)

FIG. 19 is an example of a station map 71. The operation plan processing unit 23 displays the station map 71 on the user terminal device 3 at any timing in response to a request from the user. The station map 71 displays a position of each station and a current position of the user on a map.

FIG. 22 is an example of a station map 85. The operation plan processing unit 23 displays the station map 85 on the provider terminal device 4 at any timing in response to a request from the provider. The station map 85 displays a position of each station and a current position of the vehicle on a map.

### (Multifunctional Processing Unit)

The vehicle operation device 1 may include, as a program, a multifunctional processing unit (not shown) that performs attached service other than service for moving a person, or transport service. Processing performed by the multifunctional processing unit is assumed to be as follows.

The multifunctional processing unit receives an input of an "attached service order" by the user from the user terminal device 3. Examples of the attached service order are as follows.
- "Eat ∘∘ at restaurant ∘∘ in station B at ∘∘:∘∘"
- "Reserve conference room with capacity of o persons from ∘∘:∘∘ to ∘∘:∘∘ at shared office of station C"
- "Receive oo at oo:oo at home delivery store of station D"

Then, the multifunctional processing unit transmits the attached service order to the restaurant or the like of the station.

The multifunctional processing unit receives an input of a "transport service order" by the user from the user terminal device 3. The transport service is service for transporting luggage between bases regardless of whether a person gets on or off in a case in which the vehicle 41 can transport the luggage for a profit purpose. Examples of the transport service order are as follows.
- "Transport oo from station A so as to arrive at home delivery store of station B before ∘∘:∘∘"

Then, the multifunctional processing unit transmits the transport service order to the home delivery store or the like of the station.

### (Effects according to Present Embodiment)

Effects of the vehicle operation device according to the present embodiment are as follows.
(1) The vehicle operation device can generally provide a supply-demand difference of a mobility service between bases to a mobility service provider.
(2) The vehicle operation device enables the user to wait comfortably in the waiting room at the base.
(3) The vehicle operation device can receive an operation plan corresponding to a supply-demand difference from a provider of a vehicle having any capacity.
(4) The vehicle operation device can attract a user in cooperation with a commercial facility or the like.
(5) The vehicle operation device can acquire a demand of a walking user and acquire a supply of a traveling vehicle.
(6) The vehicle operation device can receive an order of attached service that can be used by a user at a base.
(7) The vehicle operation device makes it easy to receive service such as eating and drinking at a base.
(8) The vehicle operation device also contributes to transport of luggage between bases.

The invention is not limited to the embodiment described above, and includes various modifications. For example, the above-described embodiment has been described in detail for easy understanding of the invention, and the invention is not necessarily limited to those including all the configurations described above. Part of the configuration according to one embodiment can be replaced with the configuration according to another embodiment, or the configuration according to one embodiment can be added with the configuration according to another embodiment. A part of the configuration according to each embodiment may be added to, deleted from, or replaced with another configuration.

### Reference Signs List

1 vehicle operation device
2 network
3 user terminal device
4 provider terminal device
5 station
6 vehicle detector
7 number of waiting persons detector (kiosk terminal device)
8 lobby display
9 waiting room display
11 central control device
12 input device
13 output device
14 main storage device
15 auxiliary storage device
16 communication device
21 demand processing unit
22 supply-demand difference processing unit
23 operation plan processing unit
24 vehicle arrival processing unit
31 number of waiting persons information
32 demand expression information
33 total demand information
34 operation plan information
35 supply-demand difference information
36 station information
37 vehicle information
38 arrival information
39 arrival notification information

## Claims

1. A vehicle operation device comprising:
a supply-demand difference processing unit configured to calculate a difference between a demand for a mobility service for moving a person between bases and a supply of the mobility service for each combination of the bases; and
an operation plan processing unit configured to transmit the difference to a provider of a vehicle that implements the mobility service for each combination of the bases.

2. The vehicle operation device according to claim 1, further comprising:
a demand processing unit configured to acquire the demand from a waiting room of the base, wherein
the operation plan processing unit transmits an operation plan of the vehicle to the waiting room.

3. The vehicle operation device according to claim 2, wherein
the operation plan processing unit receives a new operation plan of the vehicle according to the difference from any provider.

4. The vehicle operation device according to claim 3, wherein
the base is attached to any facility that attracts a large number of persons.

5. The vehicle operation device according to claim 4, wherein
the demand processing unit acquires the demand from a user terminal device used by the person, and
the operation plan processing unit acquires the new operation plan from a provider terminal device mounted on the vehicle.

6. The vehicle operation device according to claim 5, further comprising:
a multifunctional processing unit configured to receive an order of attached service other than the mobility service that is used by the person at the base.

7. The vehicle operation device according to claim 6, wherein
the attached service includes at least one of eating and drinking service, rental office service, and home delivery service.

8. The vehicle operation device according to claim 7, wherein
the multifunctional processing unit receives an order of transport service of luggage, which is performed by the vehicle between the bases.

9. A vehicle operation method of a vehicle operation device, the vehicle operation method comprising:
calculating, by a supply-demand difference processing unit of the vehicle operation device, a difference between a demand for a mobility service for moving a person between bases and a supply of the mobility service for each combination of the bases; and
transmitting, by an operation plan processing unit of the vehicle operation device, the difference to a provider of a vehicle that implements the mobility service for each combination of the bases.

10. A vehicle operation program for causing a computer to function as:
a supply-demand difference processing unit configured to calculate a difference between a demand for a mobility service for moving a person between bases and a supply of the mobility service for each combination of the bases; and
an operation plan processing unit configured to transmit the difference to a provider of a vehicle that implements the mobility service for each combination of the bases.
